# EUROPEAN PATENT SPECIFICATION

(11) **EP 2 689 982 B1**
(45) Date of publication and mention of the grant of the patent: **08.11.2017**
(21) Application number: 12178116.5
(22) Date of filing: 26.07.2012
(51) Int. Cl.: B60W 20/12, B60W 10/06, B60W 10/08, B60W 10/26, G08G 1/0968, G01C 21/34

(54) **Method of operating hybrid vehicles**
Verfahren zum Betrieb von Hybridfahrzeugen
Procédé d'entraînement de véhicules hybrides

(43) Date of publication of application: 29.01.2014
(73) Proprietor: FUJITSU LIMITED, Kawasaki-shi, Kanagawa 211-8588 (JP)
(72) Inventor: Tesanovic, Milos, Hayes, Middlesex UB4 8FE (GB); Vadgama, Sunil Keshavji, Asford, Middlesex TW15 3RD (GB); Wilson, Mick, Romsey, Hampshire SO51 5RW (GB)
(74) Representative: Stebbing, Timothy Charles

(56) References cited:
- EP-A1- 1 842 757
- EP-A1- 2 071 285
- EP-A2- 1 297 982
- DE-A1-102009 000 970
- US-A- 5 815 824
- US-A- 5 892 346
- US-A1- 2007 073 455

## Description

### Field of the Invention

The present invention relates to hybrid vehicles, especially but not exclusively hybrid electric vehicles (HEVs), and more particularly to control of switching between power sources in HEVs.

### Background of the Invention

Hybrid vehicles use a mixture of power or fuel sources. A subclass of hybrid vehicles is the hybrid electric vehicle, or HEV. HEVs use an electric motor, powered by a battery and/or by a generator, in addition to the internal combustion engine (ICE). The subsequent description will focus on full hybrids, i.e. vehicles that can run on just the internal combustion engine, just on the electric motor, or a combination of both. These ways of operating are referred to as "drive modes" or simply "modes". Below, running the vehicle on the electric motor alone, supplied by the battery, is referred to as an "electric-only" mode. Electric-only mode is a preferred example of a drive mode in which emissions (greenhouse gases and other pollutants) are reduced in comparison with a drive mode using the ICE. Such drive modes are referred to below as "reduced-emission" modes.

An HEV already produces less emission from its ICE than a comparably-sized petrol-driven car, because its ICE only starts once the vehicle has reached a predetermined speed and once operating, the ICE runs in a narrow operating range. State-of-the-art HEVs further reduce emissions by shutting down the ICE when idling. They also make use of efficiency-improving technologies such as regenerative braking, which converts the vehicle's kinetic energy into battery-replenishing electric energy. In state-of-the-art HEVs electric-only mode can only be used for short distances and relatively low speeds (e.g. 30mph); however, based on recent announcements this will increase in future HEVs. The limited range of HEVs in electric-only mode is a consequence of the capacity of the battery; thus the state of charge (SOC) of the battery is an important parameter for control of a HEV.

HEVs are viewed as a key contributor to reduction of pollution in urban areas. Nowadays, the majority of air pollution in urban areas comes directly from road traffic rather than industry. Road traffic is considered to be responsible for 25% of all emissions in Europe. Moreover, CO₂, which is a major product of ICE car emissions, is a greenhouse gas. Efforts are being made to reduce air pollution and its consequent environmental impacts, especially in urban areas. These efforts include, for example, providing incentives for urban drivers to purchase and drive a HEV rather than a conventional ICE-based car.

Thus, operating HEVs in electric-only mode is of great importance to reducing the emissions of CO₂ and other pollutants. HEVs typically include a sophisticated control unit or "onboard computer" to manage the ICE, electric motor, and other functions. Currently the onboard computer autonomously oversees operation of the entire system, determining which mode to use, in other words which power source (ICE or electric motor) should be running, or if both should be in use.

Proposals have been made recently for existing HEV systems to use advanced algorithms to make more efficient use of electric-only mode. These proposals are focussed on the on-board computer assisting a driver to select an appropriate mode based on the battery SOC, in some cases based on receiving information on traffic conditions. However, proposals to date have focussed on the HEV's onboard computer operating autonomously. To reduce pollution effectively, there is a need for a method of controlling a HEV which takes account of conditions outside the vehicle.

The concept of the "Smart City" is meanwhile receiving attention. This term refers to a city in which various departments and services are interconnected, and in which a large-scale network of sensors is deployed, the sensor readings being used to monitor various parameters such as traffic congestion and pollution. This enables transport and other services to be kept running smoothly and to some extent autonomously: for example traffic congestion information may be used to manage traffic lights.

US5815824 discloses a navigation system mounted on an electric automobile. A destination, to which one wants to drive by the automobile, is inputted as drive plan information. Based on a distance planned to be driven by the automobile to the destination and a remaining capacity of the battery determined by remaining capacity detector, it is determined whether the automobile can reach the destination with the remaining capacity of the battery.

### Summary of the Invention

According to a first aspect of the present invention, there is provided a method of determining mode switching among power sources of a hybrid vehicle, the hybrid vehicle including, as one of the power sources, an internal combustion engine, and capable of running in a plurality of modes including a reduced-emission mode, the method performed by a central entity and comprising: receiving, from the hybrid vehicle, planned route information indicating a route planned to travel in the hybrid vehicle; obtaining pollution information pertaining to the route, the pollution information including pollution restrictions in force in a pollution control zone intersected by the planned route; calculating by a computer of the central entity, based on at least the planned route information and the pollution information, one or more switching points along the route at which to switch to the reduced-emission mode; transmitting, to the hybrid vehicle, the calculated one or more switching points; and verifying use of the reduced-emission mode by the hybrid vehicle in the pollution control zone based on information received from roadside thermal imagers.

The hybrid vehicle can be a hybrid electric vehicle, HEV, having at least one electric motor. In this case, the method can further comprise: receiving, from the hybrid vehicle, an indication of a state of charge, SOC, of a battery of the HEV, and wherein the calculating is further based on the SOC of the battery of the HEV. This avoids calculating switching points which the HEV is unable to comply with owing to its SOC.

The pollution restrictions may take various forms. One form is a complete ban on emission-causing vehicle use within the area concerned. Another form is a financial penalty (emission charge) which is applied to emission-causing vehicles in the geographical area during the time when the pollution restrictions are in force. Such a charge may vary in accordance with the emission level of each vehicle.

The pollution information may be generated externally to the hybrid vehicle, for example by a centre which is provided for traffic management of a given geographical area, urban region or Smart City. This may be the same as the "central entity" referred to elsewhere, but need not be.

The method can take into account, in said calculating, any of: congestion information relating to traffic routes; planned route information received from multiple vehicles (not necessarily only hybrid vehicles); predicted pollution levels based on such factors as weather conditions and time of day; past history data of usage of the hybrid vehicle, and in the case of a HEV, SOC information from the HEV or from multiple HEVs.

Here, "past history" includes for example the vehicle's use of brakes and accelerator as these may influence the expected range of the vehicle for a given SOC (due to regenerative braking), as well as the fuel consumption (and consequent pollution) expected to occur in ICE mode. This past history information may be stored and recalled on a per-driver basis; thus, the identity of the driver is another possible input.

In the case of a HEV having a battery, recharging the battery en route will of course improve the SOC. Therefore, the planned route information can be combined with information on positions of charging stations along the route, the calculating taking into account the positions of charging stations. This information on charging stations may be transmitted to the HEV by the central entity. Alternatively it may be information derived from a navigation device installed in the HEV.

The method can further comprise: receiving, from the hybrid vehicle, a signal indicating non-approval of at least one switching point by a driver or navigator of the hybrid vehicle, and in the event of non-approval of any switching point, the computer calculates an alternative route for avoiding the need for the non-approved switching to the reduced-emission mode at that switching point. In addition the computer may calculate an expected delay caused by following the alternative route instead of the planned route. Therefore, the alternative route need not avoid use of the reduced-emission mode altogether, but rather it may simply reduce the need for switching to the reduced-emission mode.

Any of the above methods may further comprise receiving, from the hybrid vehicle, a signal confirming that the hybrid vehicle has switched to the reduced-emission mode, for use in calculations of emission charge or verification thereof. Such a signal may be received every time the hybrid vehicle switches mode, or alternatively the hybrid vehicle may respond to polling by the central entity with an indication of the currently-engaged mode.

The thermal imagers may be used to detect the heat signature of exhaust pipes of vehicles (including hybrid vehicles) as they pass by, and then infer whether an ICE is being used or not.

In any method as defined above, the reduced-emission mode may be a zero-emission mode, that is, a drive mode of the hybrid vehicle in which the ICE is not running and during which, consequently, emissions from the hybrid vehicle are zero. In the case of a HEV for example this would be an electric-only mode.

According to a second aspect of the present invention, there is provided a computer configured to provide a central entity for traffic management and configured to perform any method as defined above.

Thus, embodiments of the present invention provide a scheme for intelligent switching between drive modes in a hybrid vehicle, one specific example being electric and conventional internal combustion engine (ICE) propulsion in a HEV. The switching is based on pollution information, combined with planned route information. The proposed scheme uses all available information to advise the driver (and/or intelligently control the car's fuel system) which is the best power source, or mix of power sources, to apply and when. This enables the journey to be completed such that adequate battery charge is available to transit any pollution control zones covering the planned route. Economic criteria are also considered by the system depending on the priority set by the driver or priorities applied by the city/environmental authorities. The system is capable of handling dynamic changes in controlled pollution zones within a Smart City.

A primary benefit of embodiments is to create and improve dynamic and agile smart city and smart vehicle systems which reduce the impact on pollution concentration. At the driver level, the proposed invention offers a means of reducing/eliminating the costs arising from potential pollution control zones based pollution charging schemes which may be introduced in smart cities over the next decade. Whilst the technology of battery and reduced pollution fuels/pollution free fuels are continuously improving, it is unlikely that adequate city & rural (country wide) infrastructure for vehicle battery charging will be available, or that the number of battery powered only vehicles will account for a significant proportion of total vehicles operating in a city over the next 10 years or so. Therefore, at least over the next 10 years, hybrid vehicles are likely to be far more prevalent and thus smart/intelligent selection of propulsion power source is expected to be appealing in urban areas where pollution control becomes necessary.

### Brief Description of the Drawings

Reference is made, by way of example only, to the accompanying drawings in which:
Figure 1 is a block diagram of functional units in a HEV to which the present invention may be applied;
Figure 2 schematically shows route planning in embodiments of the present invention;
Figure 3 is a flowchart of process steps in embodiments of the present invention; and
Figure 4 is an overall system diagram of a HEV co-operating with a central control entity in embodiments of the present invention.

### Detailed Description

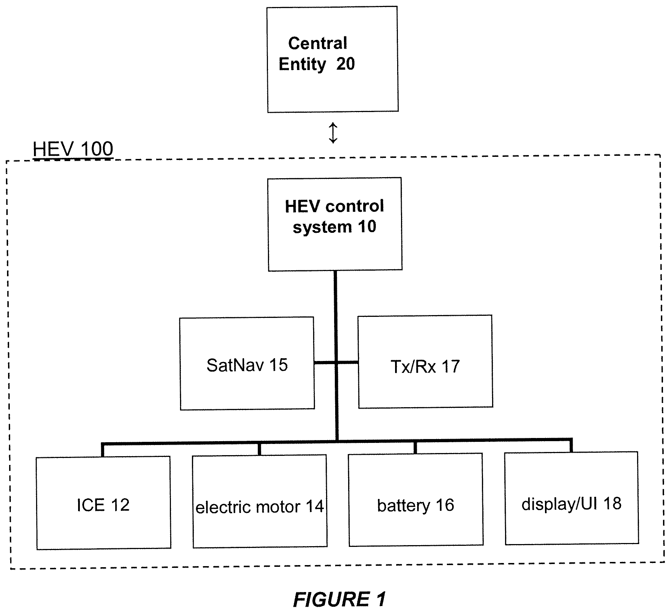

Embodiments of the present invention will now be described with reference to Figures 1 to 4. Reference is made below to a hybrid electric vehicle (HEV) as a preferred example of a hybrid vehicle to which the present invention may be applied.

Referring to Figure 1, it is assumed that the HEV 100 is equipped with an on-board computer 10 (control system) connected both to the ICE 12 and to the electric motor 14. Incidentally, there may be more than one electric motor depending on the specific HEV concerned; consequently "the electric motor" denotes one or more electric motors capable of providing motive power. The on-board computer 10 is also connected to the battery 16 at least for receiving an indication of the battery's SOC. In addition to controlling the vehicle's power sources and monitoring the battery, the on-board computer 10 is capable of providing information to a driver, for example via a dashboard-mounted display 18, and/or through an audio system. Such information may include the drive mode currently engaged as well as the current SOC. It is assumed that the available drive modes include one or more modes in which exhaust emissions from the ICE are zero, or at least reduced in comparison with other drive modes of the vehicle. Such a mode is called a "reduced-emission mode" in the claims. For simplicity, in the description which follows, this mode is referred to as "electric-only mode" although it should be understood that this is only a preferred example.

In addition, some form of user interface (UI) is associated with the display 18. The display 18 may be touch sensitive, in which case the driver (or navigator) may interact with the on-board computer 10 by touching appropriate areas of the display. Alternative, buttons or keys adjacent the display may provide the input side of the UI.

In addition, the car computer will normally be linked to, or incorporate, a navigation system based on position finding by GPS for example. This is illustrated by the unit SatNav 15 in Figure 1. It should be noted that various forms of position finding are possible in addition to GPS and other satellite-based positioning systems, including wireless network triangulation, roadside transponders which communicate with the vehicle, or dead-reckoning calculations based on vehicle speed, acceleration and steering. The navigation system may, of course, use the same display unit 18 to show maps and other information to the driver. As will be explained, the on-board computer is capable of receiving from, and preferably transmitting to, a central entity 20 over a wireless link, as denoted by the unit Tx/Rx 17 in Figure 1. It should be noted that the wireless link need not be for use of the driver, although it could be. The connecting lines in Figure 1 represent, for example, a system bus of the electronic units within the vehicle; however the exact manner of interconnection of the units is not important.

The central entity 20 is, for example, a traffic and pollution management control centre responsible for one or more geographical areas, particularly but not necessarily exclusively urban areas. For example, the central entity may be the traffic management system of a Smart City. It is assumed for the purposes of the present embodiment that the central entity 20 has means of communicating with and locating the HEV in question, as well as access to environmental and congestion parameters in the immediate and/or wider vicinity of the HEV. In addition, it is preferable for the central entity 20 to have access to the battery status (SOC) of the HEV in question. The central entity is envisaged here primarily as responsible for pollution management, although it may have additional tasks including congestion management.

For the purpose of verifying emissions of vehicles in the geographical area managed, the central entity may be linked to a network of roadside sensors capable of detecting the presence and/or composition of vehicle exhaust emissions. Alternatively, thermal imagers can be used to detect the heat signature of an exhaust pipe of a passing vehicle and thereby to infer whether or not an ICE is being used by the vehicle.

Further inputs to the central entity may include roadside cameras capable of reading car registration plates, and consequently capable of locating the HEV as an alternative or a back-up to interrogating the HEV's on-board computer 10.

The principle of the method of the invention can be expressed in general terms as follows. The driver inputs details of the route planned to be undertaken (below, "planned route information") to the HEV's on-board computer. A series of calculations is performed to recommend the power source switching for an HEV based at least on pollution information along the planned route and preferably also based on the HEV's battery status (SOC). Here "pollution information" means information on currently-existing levels of pollution on the route, information about pollution restrictions currently in force, or both. Pollution restrictions may imply a financial charge to a driver who uses an ICE in the area concerned, at least at certain times such as rush-hour.

The driver (or the HEV on-board computer) then switches to a reduced-emission mode (e.g., electric-only mode) when the observed pollution is above a certain threshold (for the conscientious driver, who does not wish add to the existing pollution level), or when pollution restrictions are in effect (for the financially motivated driver). The switching calculation can be a one-off operation performed as the driver is about to set off on their journey, or it can be revised in real-time as traffic and pollution situation changes over the course of the journey.

The method can take various forms and can be implemented in different ways.

In a first example, the method is implemented largely within the HEV on-board computer 10 to perform the switching automatically, or to display the suggested switching operation to the driver. Preferably in the first example, an external source such as the central entity transmits pollution information (e.g. pollution restrictions currently in force) and congestion information to the HEV on-board computer, which then determines for itself the appropriate mode switching. This case would be more appropriate when the central entity is not aware of the vehicle's SOC.

In a first embodiment, the central entity is aware of the HEV's location and planned route as explained below. The method is implemented largely in the central entity 20 which then provides mode switching indication to the driver or the HEV on-board computer 10. Preferably in the first embodiment, the HEV sends an indication of its SOC to the central entity.

In the case of a Smart City or other urban areas in which financial charges apply to vehicle use, a reduced congestion/low-emission charge may be incurred if the driver is willing to switch to the electric-only mode in a certain area or for a certain time. The central entity may communicate wirelessly with the HEV in question to update the on-board computer with new congestion price and/or to conduct automated billing of the HEV, based on the pollution and/or congestion status.

Not to be confused with financial charge to the driver of the HEV, the battery's charge (SOC) can be replenished by charging it along the planned route. To assist with this, in a second example the system can update the car's control with the locations of charging stations-this would be applicable to plug-in hybrid electric vehicles, or PHEVs. Analogously, "charging stations" may also be considered for other kinds of hybrid vehicle, such as vehicles based on storing chemical energy (fuel cells) or mechanical energy (flywheels).

In a second embodiment, depending on pollution the network suggests alternative routes if the HEV is unable or unwilling to use electric propulsion. The system can then also estimate the delay this will incur.

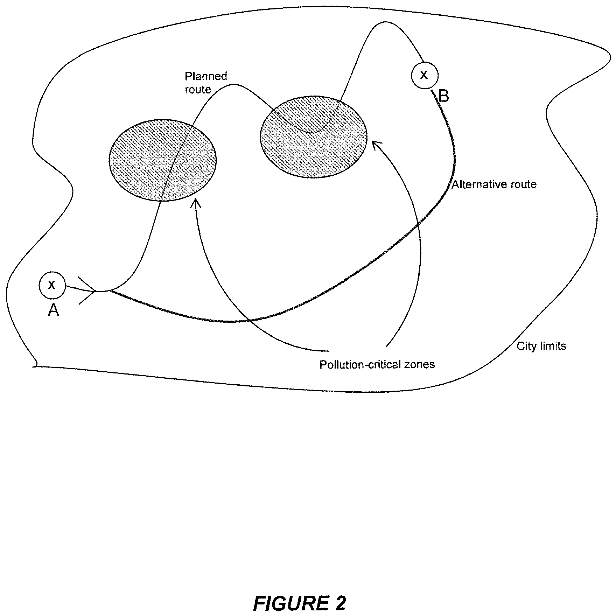

Figure 2 illustrates the principle of the second embodiment. Suppose that the driver of the HEV wishes to undertake a journey from one side of a city to the other. Figure 2 shows a "Planned route" between a starting point "A" and a destination "B" which crosses two "pollution-critical zones" indicated by shaded ellipses. These pollution-critical zones correspond to the pollution control zones referred to below. As shown in Fig. 2, an alternative route" avoids the shaded zones although possibly at the cost of a longer journey, implying a delay in arrival compared with the Planned route.

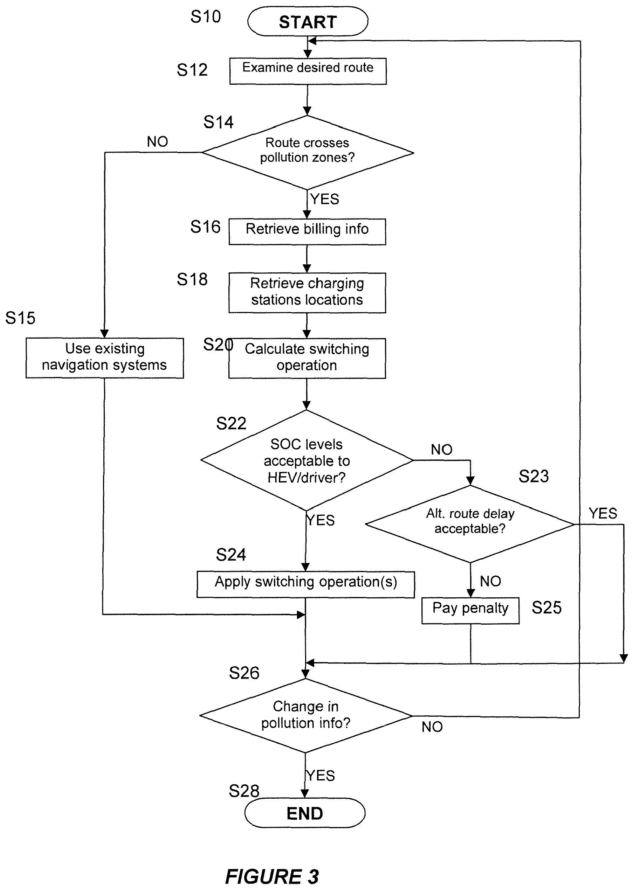

Figure 3 is a flow chart illustrating the algorithm in general terms, applicable to any of the above examples and embodiments.

After the algorithm starts (S10) the first step is to examine the planned route (S12) of a journey to be made by the HEV 100. Typically the planned route will be obtained by the driver inputting a desired destination into the HEV's SatNav 15. If the journey is not planned to begin immediately, the time of departure should also be specified.

Next, step S14 examines whether the planned route crosses one or more "pollution control zones", in other words geographical areas in which pollution is considered to be a problem. These are also referred to below simply as "control zones". The control zones may either be fixed in their geographical areas, or variable in extent. In addition they may be permanent or temporary (i.e. activated/deactivated at certain times of day, such as rush hours). Typically the control zones will be managed dynamically by city authorities for example as part of a Smart City, via the central entity 20. The pollution control zones may reflect not only current pollution levels but also expected future pollution levels, for example as traffic levels and temperature are expected to increase during the day. This step includes the case where the planned route crosses a single control zone, and/or the possibility of starting and finishing a journey wholly within a single control zone.

The pollution control zones may be associated with pollution restrictions. Pollution restrictions may involve a complete ban on emission-causing vehicle use within the area concerned, but are more likely to take the form of a financial penalty (emission charge/congestion charge) which is applied to emission-causing vehicles which enter the zone during the time when the pollution restrictions are in force, and which may be set at one of a number of different levels depending on how polluting each vehicle is.

Thus, in step S16, any billing information associated with the pollution control zones (that is, charges which will be incurred by crossing them) is retrieved.

An optional step S18 in the second example is to retrieve the locations of any charging stations, suitable for charging the HEV, along or adjacent the planned route. This may make the difference between the HEV being unable to switch to electric-only mode in the control zone owing to its SOC, and being able to do so.

Step S20 is to calculate, based on all the information obtained in steps S12 - S18, a switching point for electric-only mode. This includes not only switching from ICE to electric-only mode, but also back from electric-only mode to ICE-mode, and includes the possibility of multiple switching back and forth between (or among) modes. The switching points will normally be expressed as locations, allowing them to be flagged on the display 18 when the SatNav calculates that the location has been, or is about to be, reached. In addition, the switching points may be displayed at the start of the journey.

Assuming that the switching operation is from ICE to electric-only mode, Step S22 is a step of determining whether the calculated switching operation is acceptable. In S22, "SOC levels" (plural) are mentioned because there may be multiple points along the route where ICE to electric-only mode switching needs to be performed, each point associated with a SOC level. Incidentally, although S22 represents this decision in terms of SOC level, this need not be the sole criterion for acceptability. For example, a performance reduction due to switching to electric-only mode might be unacceptable to the driver.

This step may be performed by the on-board computer 10 autonomously, or by the driver alone, or by a combination of both on-board computer 10 and driver. The step may be performed either mid-journey, as switching points are approached, or at the start of the journey.

As an example of determination by both on-board computer 10 and driver, each SOC level may be checked against at least one predetermined threshold. Below a "low" threshold, such as 10% of full charge, the on-board computer 10 may decide by itself that a switch to electric-only mode is unacceptable, without asking the driver. Conversely, if the SOC level is above a "high" threshold such as 90%, the on-board computer 10 may be arranged to approve the switching without asking the driver. Any intermediate value could then be referred to the driver for approval.

"Referred to the driver" would involve, for example, displaying a query on the display 15 to which the driver would respond by pressing a yes/no button, or the like. If the switching operation is acceptable (S22, "YES"), the switching operation is applied at the appropriate time (S24). In other words the HEV changes mode to, for example, electric-only mode and the HEV proceeds along the planned route. Step S22 may either be performed in 'real-time', namely shortly before reaching the switching point and with step S24 following without delay, or alternatively may be performed ahead of time, with S24 delayed until the vehicle actually reaches the switching point.

In the second embodiment (Figure 2), in the case that the HEV/driver does not accept a recommended switching operation for whatever reason (S22, "NO"), step S23 considers the delay, in terms of expected travel time, between the originally-planned route and an alternative route which avoids the pollution restriction. The alternative route may be calculated by the on-board computer 10 using the SatNav 15. Alternatively, if the central entity 20 knows the vehicle's location and intended destination, the central entity may calculate the alternative route and transmit details to the on-board computer 10, for example as a series of location points. Factors to be taken into account here will include the length of the alternative route; speed restrictions in force on the alternative route as compared with the planned route; the driver's driving style including use of accelerator, brakes and so on (as captured in past history data); and any difference in average speed expected as a result of avoiding the pollution restriction (for example ICE mode may be faster than electric-only mode).

For simplicity, the alternative "Alt. route delay acceptable - YES" is shown as proceeding to S26 "Change in pollution info?". The alternative route may be calculated on the assumption that ICE-only operation will be used, in which case no further processing may be needed. Alternatively if the alternative route is to be driven in multiple modes, it will be necessary to recalculate the switching operation in similar fashion to S20. This would in turn lead to a need to recalculate the delay expected by the alternative route.

S26 is a step of checking whether there has been any change in the pollution information (including any pollution restrictions in force). If not then the vehicle will normally proceed on its route until reaching its destination (S28). Although not shown for simplicity, it would be possible for events to occur that require re-evaluation of the route. Such events could be external, for example information on a traffic jam ahead, either provided by the central entity or alerted via the SatNav 15, or "internal" to the vehicle such as an unexpected diversion by the driver.

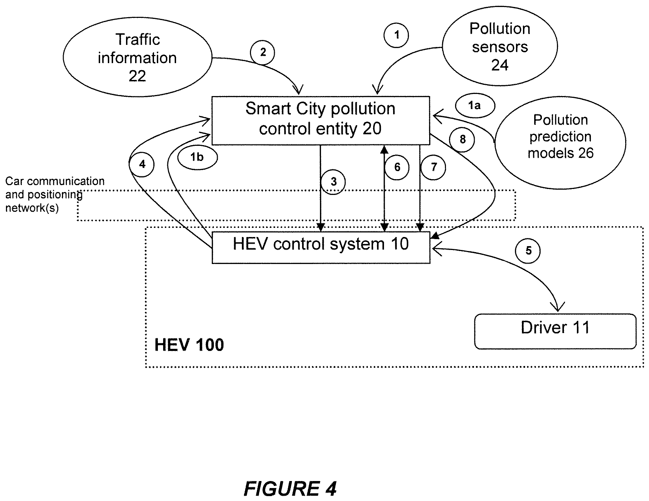

The signal flows in examples and embodiments of the present invention are shown in Figure 4. The initial description is the same for all the examples and embodiments. Later signalling differs between the examples and embodiments as will become clear.

The central entity 20 receives and collects regular measurement data updates from pollution sensors 24 as indicated by the arrow labelled (1), and can thus determine the existing pollution levels in a given geographical area. The HEV 100 may also transmit details of its planned route to the central entity as indicated by arrow (1b). The planned route may, for example, be expressed as a sequence of geographical points (longitude and latitude) where the distance between successive points is short enough for the route to be unambiguous. This allows the central entity to predict pollution levels along the intended route. In addition the centralised entity 20 receives traffic information 22 as shown by arrow (2).

Using pollution prediction models 26, arrow (1a), and based on the current levels of pollution, trends, local weather conditions now and in future, ICE-using vehicle traffic density levels (current and forecasted) etc, the central entity 20 can simulate and predict pollution forecasts. Based on the forecasts and pre-determined thresholds (as determined for example by city policies, an environmental agency or a combination of both), pollution control zones can be activated or de-activated.

In the first example, vehicles including HEV 100 are alerted to the status of control zones, as indicated by (3). This can be done at the start of the journey, and to vehicles already in mid-journey (but outside of the control zone), and to anyone subscribing to the alert service. Preferably, the status of the control zones is broadcast so that whom (or what) ever that needs the information can access automatically the status of the control zones. Signalling (3) may be performed indirectly, for example to a mobile phone of the driver 11 who then enters the required information to the on-board computer 10 either manually or by uploading.

Once the HEV 100 has information of the control zones, the appropriate computation can be performed with respect to journey route so as to avoid violating the control zone(s) (and thus not pay the pollution control zone penalty/charge). In the electric-only mode, the vehicle uses the electric motor for propulsion; consequently, it needs to conserve sufficient battery charge to traverse the pollution control zone (without needing to revert to ICE). Since ICE operation typically acts to charge the battery as well as providing motive power to the HEV, the calculation preferably takes into account the effect of ICE operation on charging the battery. A further refinement is to take into account past history data of the driver's use of the accelerator and brakes, in order to arrive at a more realistic figure for the vehicle range and/or to estimate the likely effect of regenerative braking upon charging the battery. Such data may be gathered by the on-board computer over a period of use of the vehicle, if necessary on a per-driver basis where there is more than one user of the vehicle.

In addition some safety margin needs to be applied when considering the effect of the planned route on the SOC. This computation and predictions need to take account of congestion levels, specific route terrain information, road closures (due to road works, flooding, accidents, etc), air temperature/humidity and other such information which may impact the HEV range. The air temperature and humidity may affect the battery efficiency.

In the second example, if, during the journey, the vehicle is able to park at a location where battery charge may be topped-up, this can also be taken into account in the calculation. Normally this will require the driver's agreement in view of the time involved in stopping to recharge. Thus, the driver confirms agreement to the on-board computer 10 by entering the information manually through the user interface. As already mentioned the locations of charging terminals may be obtained wirelessly from the central entity (indicated at (7) as mentioned below), or derived from SatNav maps. Alternatively, the information could be wirelessly communicated to the central entity via a mobile terminal, using the existing mobile telephone networks.

The vehicle then needs to guide the driver as indicated at (5) to select (or automatically select) the electric-only mode just prior to entering the control zone and may switch to ICE upon exiting the control zone.

The signalling in the first embodiment differs in a few respects as follows.

The system needs to first of all establish the location of the HEV, and this can be done using some of the methods known in prior art (these include but are not limited to: GPS; cellular triangulation; use of car transponder using WAVE (IEEE 802.11p). In this embodiment, arrow (3) indicates that the central entity informs the HEV on-board computer that it should switch to electric propulsion based on pollution information (and possibly prediction thereof). The timing of this information (switch indication) will normally be at the time (or shortly before) the vehicle is entering the restricted area. Alternatively the information may be provided in advance of the time when actual switching needs to be performed (for example at the start of the journey) along with an indication of the appropriate timing.

The switch indication from the central entity for an HEV can be determined on HEV-by-HEV basis, or it can take into account a number of HEVs in a certain area and attempt to reduce the global emission levels by jointly optimising power source switching for multiple HEVs.

This information will be more reliable if the central control has SOC information from the HEV on-board computer, and preferably in the first embodiment, a feedback path (4) from the HEV 100 to central entity 20 is provided to convey this piece of information. If this information is unavailable to the central entity then any signals from this entity to the HEV to switch to the electric propulsion can be taken as recommendations and it is down to the HEV on-board computer and/or the driver to make the decision as indicated at (5) and already mentioned above with respect to the first example.

Suppose that, in the geographical area within which the planned route is located, a congestion or emission charge is in force for all vehicles (including HEVs not in electric-only mode). In this case the central entity, which in this particular case may or may not have the car SOC information via path (4), can incentivize the driver to switch to electric propulsion by offering lower congestion/low-emission charge and for this purpose this invention assumes that the communication with the car includes a way of offering different values of congestion charge and conducting suitable flexible billing, to stimulate appropriate driver behaviour as indicated by arrow (6).

Arrow (6) is also used to indicate verification of the HEV power source usage agreed to by the driver. This can be done by having the HEV car computer periodically report its current power source (to confirm it is has indeed switched to electric-only mode), or simply to have the HEV car computer notify the central entity whenever the power source switching is performed. An alternative would be for the central control to query the HEV computer at random intervals, periodically, upon exiting the pollution control zone or at the end of the journey about use of the electric-only mode or conversely, fuel consumption by the ICE. In this way, charging of the driver can be based on actual behaviour rather than the driver's agreement.

In the second example a communications path to the HEV is assumed, indicated by arrow (7), that carries the location of nearby charging points based on the HEV's location and planned route information (1b). This allows the on-board computer 10 to take into account, in its calculation of switching points, the availability of charging points along the route to top up the battery thereby permitting greater use of the electric-only mode. Alternatively it may be possible for the HEV's on-board computer to obtain information on charging locations from the SatNav 15 as part of map updates. As a further alternative the locations of charging points may be taken into account by the central entity 10 when making recommendations in the first embodiment.

In the second embodiment, the central control suggests alternative routes (based on information in 1b) for an HEV that cannot or will not observe the suggested switch to electric propulsion only (8). A refinement of this embodiment is for the central entity 20 to indicate the estimated delay these alternative routes will incur. Calculation of alternative routes is also possible in the on-board computer of the HEV 100, given sufficient information from the central entity.

To summarise, examples and embodiments of the present invention may provide a method of determining power source switching for a hybrid electric vehicle, HEV, based on its battery status and pollution information along the planned route. The driver (or battery status and pollution information along the planned route. The driver (or the HEV on-board computer) then switches to a reduced-emission mode such as electric-only propulsion when the observed pollution is above a certain threshold. The method can either be implemented within the HEV on-board computer to perform the switching automatically, or to display the suggested switching operation to the driver. A centralized entity (such as traffic and pollution management control within a Smart City system) which has means of communicating with and locating the HEV in question, as well as access to environmental and congestion parameters, provides a power source switching indication to the driver or the HEV on-board computer. Alternatively the central entity passes on the pollution and congestion information to the HEV on-board computer, which then determines the power source switching.

Various modifications are possible within the scope of the present invention.

In the above embodiments, reference is made to switching between an ICE mode and an electric-only mode of a HEV. However, these are not the only possible modes of operation of a HEV. For example a HEV may operate in a mixed mode wherein both the electric motor(s) and the ICE work together; alternatively the ICE may be idling at certain times when motive power is being provided by the electric motor. The term "electric-only mode" preferably means a drive mode in which the ICE is not operating at all and is not idling, in other words a zero-emission mode. More generally, in accordance with the present invention the HEV may be switched to any "reduced-emission mode" in which the vehicle's exhaust emissions are reduced in comparison with ICE-only mode.

In any case, the present invention is not necessarily only applicable to HEVs. Any kind of hybrid vehicle offering alternative drive modes including a reduced-emission mode or zero-emission mode can be beneficially used with the switching scheme provided by embodiments of the present invention. Thus, the present invention is applicable to various types of hybrid vehicle, such as vehicles based on storing chemical energy other than combustible fuel (e.g. fuel cells) or mechanical energy (e.g. flywheels). example in the form of a computer network. As one example, a first computer may be responsible for calculating switching points and networked to other computers for receiving pollution information, congestion information and so forth.

It should be noted that in the case of the example the use of a central entity, whilst desirable for overall management of pollution in the geographical area covered, is not absolutely essential. A possible example would be one in which drivers of HEVs wish to use pollution information independently of any external check or control, for reasons of conscience.

In the case of a HEV, the reduced-emission mode is preferably an electric-only mode, and this will typically be a "battery-only" mode. For the foreseeable future, it can be assumed that HEVs will have an on-board battery as a power source for the electric motor(s). However, bearing in mind the possibility of the vehicle obtaining electric power in other ways, such as through solar cells or via induction from ground conductors, the electric-only mode means any mode which is emission-free.

Incidentally, throughout this patent application the term "battery" is to be understood as including any form of electrical storage including supercapacitors. Other forms of energy storage, capable of being "charged" in like fashion to an electrical battery, may be replenished at "charging stations" in the same manner as described above for the battery of a HEV. The terms "battery" and "charging station" are thus to be interpreted broadly.

The above description has referred to a "driver", but of course it is unimportant which user of the vehicle interacts with the on-board computer. This task may for example be delegated to a passenger acting as navigator. However, the specific driver intended to undertake the planned journey may be relevant for determining the range of the vehicle, as different drivers have different habits of brake/accelerator use, etc. Thus, identity of the driver is another possible input to the calculation if past-history data of this kind is employed.

The above embodiments have assumed communication between the on-board computer of a HEV and the central entity 20. However, in addition, or alternatively, the vehicles operating in an active pollution control zone may be monitored by external means such as sensors and cameras. For example the city authorities can detect the vehicle exhaust (and/or engine) heat signatures at various sample points using thermal imaging cameras appropriately positioned along its road network. This combined with number plate detection and if appropriate supplemented with a driver photo recording system would enable the city authorities to process, claim and recover the appropriate financial charges for emission-causing vehicles entering control zones.

### Industrial Applicability

Embodiments of the present invention allow efficient and appropriately timed use of a reduced-emission mode in hybrid vehicles by using pollution indicators as additional input parameters when recommending a running mode. While congestion can be successfully reduced using prior art solutions, the urbanisation and migration of people to cities will mean that the overall number of vehicles in cities will increase, and that subsequently additional solutions are needed for pollution reduction. Embodiments of the present invention provide such by solution by adapting mode control of hybrid vehicles to currently-prevailing pollution conditions or restrictions along the vehicle's route.

## Claims

1. A method of determining mode switching among power sources of a hybrid vehicle (100), the hybrid vehicle (100) including as one of the power sources an internal combustion engine (12), and capable of running in a plurality of modes including a reduced-emission mode, the method performed by a central entity (20) and comprising:
receiving, from the hybrid vehicle (100), planned route information indicating a route planned to travel in the hybrid vehicle (100);
obtaining pollution information pertaining to the route, the pollution information including pollution restrictions in force in a pollution control zone intersected by the planned route;
calculating (S20), by a computer of the central entity (20), based on at least the planned route information and the pollution information, one or more switching points along the route at which to switch to the reduced-emission mode;
transmitting, to the hybrid vehicle (100), the calculated one or more switching points; and
verifying use of the reduced-emission mode by the hybrid vehicle (100) in the pollution control zone based on information received from roadside thermal imagers.

2. The method according to claim 1 wherein the hybrid vehicle (100) is a hybrid electric vehicle, HEV, having at least one electric motor (14).

3. The method according to claim 2 further comprising: receiving, from the hybrid vehicle (100), an indication of a state of charge, SOC, of a battery (16) of the HEV (100), and wherein the calculating is further based on the SOC of the battery (16) of the HEV.

4. The method according to claim 1, 2, or 3, wherein the pollution information includes information on pollution restrictions in force along the route.

5. The method according to any preceding claim wherein said calculating further takes into account any of:
congestion information of traffic in the vicinity of the planned route;
planned route information received from multiple vehicles;
a predicted pollution level based on weather conditions and time of day;
past history data of usage of the hybrid vehicle; and
in the case of HEVs, SOC information from one or more HEVs.

6. The method according to any preceding claim wherein the hybrid vehicle (100) includes a chargeable storage means (16) and the planned route information is combined with information on positions of charging stations along the route, the calculating taking into account the positions of charging stations.

7. The method according to claim 1 further comprising: receiving, from the hybrid vehicle (100), a signal indicating non-approval of at least one switching point by a driver or navigator of the hybrid vehicle (100), and in the event of non-approval of any switching point, the computer calculating an alternative route for avoiding switching to the reduced-emission mode at that switching point.

8. The method according to claim 7 further comprising calculating an expected delay caused by following the alternative route instead of the planned route.

9. The method according to any preceding claim further comprising: receiving, from the hybrid vehicle (100), a signal confirming that the hybrid vehicle (100) has switched to the reduced-emission mode, for use in calculations of emission charge or verification thereof.

10. The method according to any preceding claim wherein the reduced-emission mode is a zero-emission mode.

11. A computer configured to provide a central entity (20) for traffic management and configured to perform the method of any of claims 1 to 10.

## Patentansprüche

1. Verfahren zur Bestimmung einer Modusumschaltung zwischen Leistungsquellen eines Hybridfahrzeugs (100), wobei das Hybridfahrzeug (100) als eine der Leistungsquellen einen Verbrennungsmotor (12) beinhaltet und in der Lage ist, in mehreren Modi, einschließlich einem Modus mit verringerter Emission, zu laufen, wobei das Verfahren von einer zentralen Instanz (20) durchgeführt wird und Folgendes umfasst:
Empfangen, von dem Hybridfahrzeug (100), von Informationen zur geplanten Route, die eine geplante Route angeben, die in dem Hybridfahrzeug (100) gefahren werden soll;
Erhalten von Verschmutzungsinformationen, die die Route betreffen, wobei die Verschmutzungsinformationen Verschmutzungsbestimmungen beinhalten, die in einer Verschmutzungskontrollzone gelten, die von der geplanten Route durchkreuzt wird;
Berechnen (S20), durch einen Computer der zentralen Instanz (20), mindestens basierend auf den Informationen zur geplanten Route und den Verschmutzungsinformationen, von einem oder mehreren Umschaltpunkten entlang der Route, an denen in den Modus mit verringerter Emission umgeschaltet werden soll;
Übertragen, an das Hybridfahrzeug (100), des einen oder der mehreren berechneten Umschaltpunkte; und
Verifizieren der Verwendung des Modus mit verringerter Emission durch das Hybridfahrzeug (100) in der Verschmutzungskontrollzone basierend auf Informationen, die von Wärmebildkameras am Straßenrand empfangen werden.

2. Verfahren nach Anspruch 1, wobei das Hybridfahrzeug (100) ein Hybridelektrofahrzeug (HEV) ist, das mindestens einen Elektromotor (14) aufweist.

3. Verfahren nach Anspruch 2, ferner umfassend: Empfangen, von dem Hybridfahrzeug (100), einer Angabe über einen Ladezustand (SOC) einer Batterie (16) des HEV (100), und wobei das Berechnen ferner auf dem SOC der Batterie (16) des HEV basiert.

4. Verfahren nach Anspruch 1, 2 oder 3, wobei die Verschmutzungsinformationen Informationen über Verschmutzungsbeschränkungen beinhalten, die entlang der Route gelten.

5. Verfahren nach einem der vorhergehenden Ansprüche, wobei beim Berechnen ferner beliebige der Folgenden berücksichtigt werden:
Stauinformationen über Verkehr in der Nähe der geplanten Route;
Informationen zur geplanten Route, die von mehreren Fahrzeugen empfangen werden;
ein auf Wetterbedingungen und Tageszeit basierender vorhergesagter Verschmutzungsgrad;
frühere Verlaufsdaten zur Verwendung des Hybridfahrzeugs; und
im Fall von HEVs, SOC-Informationen von einem oder mehreren HEVs.

6. Verfahren nach einem der vorhergehenden Ansprüche, wobei das Hybridfahrzeug (100) aufladbare Speichermittel (16) beinhaltet und die Informationen zur geplanten Route mit Informationen über Standorte von Ladestationen entlang der Route kombiniert werden, wobei beim Berechnen die Standorte der Ladestationen berücksichtigt werden.

7. Verfahren nach Anspruch 1, ferner umfassend: Empfangen, von dem Hybridfahrzeug (100), eines Signals, das eine Nichtgenehmigung des mindestens einen Umschaltpunktes durch einen Fahrer oder Navigator des Hybridfahrzeugs (100) angibt, und wobei der Computer, im Fall einer Nichtgenehmigung eines beliebigen Umschaltpunktes, eine Alternativroute berechnet, um Umschalten auf den Modus mit verringerter Emission an diesem Umschaltpunkt zu vermeiden.

8. Verfahren nach Anspruch 7, ferner umfassend: Berechnen einer erwarteten Verzögerung, die durch Folgen der Alternativroute anstelle der geplanten Route erwartet werden.

9. Verfahren nach einem der vorhergehenden Ansprüche, ferner umfassend: Empfangen, von dem Hybridfahrzeug (100), eines Signals, das bestätigt, dass das Hybridfahrzeug (100) in den Modus mit verringerter Emission umgeschaltet hat, zur Verwendung bei Berechnungen einer Emissionsangabe oder zur Verifizierung davon.

10. Verfahren nach einem der vorhergehenden Ansprüche, wobei der Modus mit verringerter Emission ein Nullemissionsmodus ist.

11. Computer, der konfiguriert ist, eine zentrale Instanz (20) zur Verkehrssteuerung bereitzustellen, und konfiguriert ist, das Verfahren nach einem der Ansprüche 1 bis 10 durchzuführen.

## Revendications

1. Procédé de détermination de commutation de mode parmi des sources d'alimentation d'un véhicule hybride (100), le véhicule hybride (100) comprenant en tant que l'une des sources d'alimentation un moteur à combustion interne (12), et étant capable de fonctionner dans une pluralité de modes comprenant un mode à émissions réduites, le procédé étant réalisé par une entité centrale (20) et comprenant :
la réception, à partir du véhicule hybride (100), d'informations d'itinéraire prévu indiquant un itinéraire prévu pour le déplacement du véhicule hybride (100) ;
l'obtention d'informations de pollution relatives à l'itinéraire, les informations de pollution comprenant des restrictions de pollution en vigueur dans une zone de contrôle de la pollution croisée par l'itinéraire prévu ;
le calcul (S20), par un ordinateur de l'entité centrale (20), au moins sur la base des informations d'itinéraire prévu et des informations de pollution, d'un ou de plusieurs points de commutation le long de l'itinéraire au niveau duquel/desquels il convient de commuter vers le mode à émissions réduites ;
la transmission, au véhicule hybride (100), du/des point(s) de commutation calculé(s) ; et
la vérification de l'utilisation du mode à émissions réduites par le véhicule hybride (100) dans la zone de contrôle de la pollution sur la base des informations reçues à partir d'imageurs thermiques de bord de route.

2. Procédé selon la revendication 1 dans lequel le véhicule hybride (100) est un véhicule électrique hybride, HEV, comprenant au moins un moteur électrique (14).

3. Procédé selon la revendication 2 comprenant en outre : la réception, à partir du véhicule hybride (100), d'une indication d'un état de charge, SOC, d'une batterie (16) du HEV (100), et dans lequel le calcul est en outre basé sur le SOC de la batterie (16) du HEV.

4. Procédé selon la revendication 1, 2 ou 3, dans lequel les informations de pollution comprennent des informations sur des restrictions de pollution en vigueur le long de l'itinéraire.

5. Procédé selon une quelconque revendication précédente dans lequel ledit calcul prend en outre en compte un ou plusieurs quelconques éléments parmi :
des informations d'embouteillages au voisinage de l'itinéraire prévu ;
des informations d'itinéraire prévu reçues de multiples véhicules ;
un niveau de pollution prévu sur la base de conditions météorologiques et du moment de la journée ;
des données d'historique de l'utilisation du véhicule hybride ; et
dans le cas de HEV, des informations de SOC provenant d'un ou de plusieurs HEV.

6. Procédé selon une quelconque revendication précédente dans lequel le véhicule hybride (100) comprend un moyen de stockage pouvant être chargé (16) et les informations d'itinéraire prévu sont combinées à des informations sur des positions de stations de charge le long de l'itinéraire, le calcul prenant en compte les positions de stations de charge.

7. Procédé selon la revendication 1 comprenant en outre : la réception, à partir du véhicule hybride (100), d'un signal indiquant l'absence d'approbation d'au moins un point de commutation par un conducteur ou navigateur du véhicule hybride (100), et dans le cas d'une absence d'approbation d'un quelconque point de commutation, le calcul par l'ordinateur d'un itinéraire alternatif pour éviter une commutation vers le mode à émissions réduites au niveau de ce point de commutation.

8. Procédé selon la revendication 7 comprenant en outre le calcul d'un retard attendu en raison du suivi de l'itinéraire alternatif au lieu de l'itinéraire prévu.

9. Procédé selon une quelconque revendication précédente comprenant en outre : la réception, à partir du véhicule hybride (100), d'un signal confirmant que le véhicule hybride (100) a commuté vers le mode à émissions réduites, destiné à être utilisé dans des calculs de redevance sur les émissions ou de vérification des émissions de celui-ci.

10. Procédé selon une quelconque revendication précédente dans lequel le mode à émissions réduites est un mode à zéro émission.

11. Ordinateur configuré pour fournir une entité centrale (20) pour la gestion de la circulation et configuré pour réaliser le procédé selon l'une quelconque des revendications 1 à 10.
